# EUROPEAN PATENT SPECIFICATION

(11) **EP 3 383 164 B1**
(45) Date of publication and mention of the grant of the patent: **21.05.2025**
(21) Application number: 16831484.7
(22) Date of filing: 26.10.2016
(51) Int. Cl.: A01G 24/44

(54) **SELF-SUPPORTING PLUGS AND OTHER STRUCTURES FOR USE IN PLANT PRODUCTION**
SELBSTTRAGENDE STECKER UND ANDERE STRUKTUREN ZUR VERWENDUNG IN DER PFLANZENPRODUKTION
SOCLES ET AUTRES STRUCTURES AUTOPORTANTS POUR UNE UTILISATION DANS UNE PRODUCTION DE PLANTE

(30) Priority: 27.10.2015 EP 15020206
(43) Date of publication of application: 10.10.2018
(73) Proprietor: Oxydator ApS, 8000 Aarhus C (DK)
(72) Inventor: JENSEN, Martin, 9000 Aalborg (DK); PEDERSEN, Thomas, Brorsen, 8000 Aarhus C (DK)
(86) International application number: PCT/EP2016/025127
(87) International publication number: WO 2017/071823

(56) References cited:
- EP-A1- 1 639 885
- WO-A1-2004/098270
- GB-A- 2 269 378
- JP-A- 2003 047 335
- JP-A- 2009 065 974
- KR-B1- 101 314 919
- US-A1- 2004 049 980
- US-A1- 2006 070 294
- US-A1- 2011 232 188

## Description

The invention relates to a self-supporting structure used for germination of seeds and growth of plants and to methods for manufacturing this self-supporting structure.

Media for germinating seeds and growing plants is known practice, in particular in greenhouse cultivation. The germination of seeds and seedling development are commonly carried out in a plug consisting of a growth medium and possibly cohesive agents and the plug can be supported by a container. By "growth medium" it is referred to a substance in which seeds can germinate and plants can grow and it can comprise of, but is not limited to, sphagnum, compost, soil, peat, vermiculite, shredded wood, coconut fibre, blade, tissue, fertiliser and mixtures of two or more components. The seeds are sown in the plugs and as root development and plant growth proceed, the plant/seedling is transplanted into a larger growth container. During the transplanting process, the germination plug is mechanically transferred to the larger container. During the transplanting, the growth medium can disintegrate from the plug causing transplant shock to the plant/seedling. Diminishing or preferably eliminating transplant shock is beneficial as to reduce the total crop growth time.

An approach for reducing or eliminating soil falling off the roots during transplanting is to manufacture a plug containing both a growth medium and one or more binding materials. This plug must comprise an open structure similar to that of the growth medium itself as the open structure is considered important to water absorption and root propagation.

A self-supporting structure is also beneficial for larger growth container in which the plug containing the seedling can be transplanted into or in which germination can take place directly. Such larger growth container could be self-supporting and contain a growth medium.

US 3 805 531 A, US 4 175 355 A, US 5 209 014 A disclose cohesive plugs produced by means of adding isocyanates or urethane prepolymers and a curing agent to a growth medium, which through polymerisation form a cohesive structure. Later as disclosed in US20040049980, US 4 495 310 A, US 5 791 085 A plugs with a more hydrophilic polyurethane based binder is found advantageous. The use of a urethane curable as binder material in plugs used in plant cultivation provides two undesirable aspects. The first drawback is the presence of free isocyanate groups prior to the polymerisation, which constitutes a safety hazard to the persons involved in the manufacturing process of the plug. The second drawback is the slow biodegradability of polyurethane causing the plugs to be less environmentally safe compared to plugs formed from a biodegradable cohesive.

US2003140556, WO2004071176 and US 7 866 090 B2 describe the use of thermoplastic biodegradable binders for the manufaction of cohesive plugs for cultivation of plants. The thermoplastic material is mixed with growth medium and is heated in order to at least partly fluidise the thermoplastic material followed by a cooling step to solidify the thermoplastic binding agent and bond at least part of the binding agent to the growth medium. WO2004071176 describes heating the mixture of binding agent and growth medium to a temperature of 100 °C and in US2003140556 the binding agent is heated to about 60 °C, preferably 45° C and US 7 866 090 B2 states heating thermoplastic granules to 70-90 °C in order to obtain a bonding of the binding agent to the growth medium. The use of heat to at least partly fluidise the binding agent, complicates the plug manufaction production step and it causes a partial or complete sterilisation of the growth medium in the plug. Alteration of the bacterial composition of the growth medium through partial or complete sterilisation during the manufaction step of the plug might be disadvantageous for the plug as a plant cultivation medium.

When using both polyurethane and biodegradable binding agents, they are added as liquids or solid particles prior to mixing with the growth medium. In order for the binding agent to bind the growth medium into a cohesive structure, the binding agent and the growth medium should form a large interconnected network. Liquid binding agent or binding agent heated to become at least partially fluidised, flow with the open structure growth medium. The open structure of the growth medium provides it with a large surface area, which implies the possibility of a large amount of reactive sites that the binding can bind onto. The large amount of reactive sites has the disadvantage that it can consume rather large amounts of binding agent.

US2003140556 also describes the using of mixing aqueous dispersion of a binding agent, where ethylene vinyl acetate is very suitable, with the growth medium. The amount of aqueous solution relative to the amount of growth medium leads to the formation of a slurry. Said slurry is after mixing transferred to a mould and said slurry is then allowed to dry, preferably at 45 °C. The amount of ethylene vinyl acetate in said slurry is similar to the amount of growth medium, which implies a large amount of binding agent is used and this is unfavourable from a cost perspective. Further, ethylene vinyl acetate has a poor biodegradability and during the limited biodegradation process that occurs, hazardous and ozone depleting compounds can be released, which is undesirable from an ecological point of view. In another embodiments mentioned in US2003140556, fibrous material is mixed with the binding agent in order to manufacture a product with the fibrous material being on the exterior of the product to give said product an increased abrasion resistance.

In WO2013174386 a biodegradable cohesive receptacle for plant production is disclosed. Poly lactic acid is coextruded with a flexible aliphatic polyester such that the flexible aliphatic polyester covers the poly lactic acid in order to achieve a binding agent that is weldable. The binding agent is made into the shape of a sheet and is transformed into a continuous receptacle by bringing two sides of the sheet material together and weld said sides together, i.e., through applying heat to the sheet material. After forming the receptacle, it can be filled with the growth medium such that sheet made from poly lactic acid coated with the poly aliphatic ester forms the exterior of the self-supporting structure.

Poly lactic acid has also been reported useful as the main component in artificial growth medium used in plant cultivation as disclosed in US20090019765, US20110232188 and US20140259909. In the artificial growth media, the poly lactic acid comprises the entire or the majority of the growth medium in with plants can grow.

Poly lactic acid fibres have been used as binding agent in growth media, such as KR 101 314 919 B1. In JP 2003047335, the use of poly lactic acid fibres as binding material is disclosed in which the poly lactic acid fibre upon mixing with the constituents of the growth medium is heated to melt the fibre to form a cohesive structure. In a disclosed embodiment, poly lactic acid fibres constitute 20 % of the cohesive structure. Similarly, JP 2009065974 discloses the use of synthetic fibres, among others poly lactic acid fibres, with a core-shell structure where the shell has a lower melting point than the core. Upon mixing with the constituents of the growth medium, the mixture is heated to temperature between the melting point of the shell and the core so that the shell melts to adhere the constituents of the growth medium together.

The present invention, which is achieved with claim 1, relates to a self-supporting plug for germination of seeds and plant growth consisting of a growth medium held together by at least one chemical type of fibrous material where the fibrous material constitutes an agent for binding together the various constituents of the growth medium. The fibrous material can bind the constituents of the growth medium together by means and mechanical and cohesive forces. The mechanical forces define the shape of the structure and the cohesive forces bind together the fibres and the growth medium within the structure. The fibrous material is homogeneously distributed within the growth medium meaning that the weight of fibrous material relative to the weight of growth medium in the total plug is the same as in a randomly selected small volumes of the plug.

The self-supporting plug serves to reduce or eliminate transplant shock in plant cultivation and by using a fibrous binding agent, the binding agent consumption for a plug is reduced compared to prior art and the overall structure of the plug remains as close as possible to natural growth media to the benefit of seed germination and plant growth.

The invention also relates to a larger growth container consisting of the same material as the self-supporting plug. The larger growth container can have the shape of a pot and its walls and bottom consist of the same mixture of growth medium and binding agent as the plug whereas the cavity of the pot can be filled with any kind of growth medium.

The fibrous material making up the binding agent is preferably of a biodegradable type such as, but not restricted to, poly ethylene glycol, poly-ε-caprolactone, poly lactic acid, modified poly lactic acid, poly hydroxyalkanoate, hemp, flax, coconut fibres, naturally occurring fibres with examples being cotton and silk, naturally occurring fibres coated with one or more types of polymer, starch and starch based fibres, cellulose, cellulose based fibres such as lyocell and viscose, fibres consisting of carbohydrate monomers, dimers or oligomers such as sucrose and co-polymer fibres of mixtures of non-biodegradable and biodegradable components or fully biodegradable components. By using a biodegradable binding agent an environmentally safe self-supporting plug or structure is obtained.

Examples of non-biodegradable fibres are polyamides, some types of polyester such as poly ethylene terephthalate and co-polymers of non-biodegradable components. Such fibres can provide a more cost beneficial alternative to the biodegradable binding agents.

Further, the binding agent can be comprised by a fibrous material fully or partly comprised by or coated with one or more components requiring the addition of a curable to obtain the desired properties as a binding agent. The curable can bind to either the fibrous material or to the fibrous material and the growth medium and the curable can contain one or more of the following reactive chemical groups: amines, imines, carboxylic acids, thiols, and oxiranes. By using a curable a strong binding effect between the constituents of the growth medium and the binding agent can be obtained.

By "fibre" and "fibrous material" it is referred to a geometry or a material with a geometry where one dimension is significantly longer than the other or in other words a material with a high aspect ratio. For material with a cylindrical shape this implies that the length of the object is significantly long than the diameter and for rectangular objects, the length in one or two of the dimensions is significantly larger than the other dimension(s). By using a fibrous material as binding agent for the plug, a plug with an open structure similar to that of the neat growth medium is obtained.

By using the present invention it is feasible to manufacture a biodegradable, self-supporting structure at ambient temperature. The self-supporting material presented in this invention can also be manufactured in the shape of a block or mat or a self-supporting structure to which a growth medium can be added as such structure will be self-supporting and meanwhile being manufactured with a low amount of binding agent Particularly advantageous embodiments and features of the invention are given by the dependent claims, as revealed in the following description. Further embodiments may be derived by combining the features of the various embodiments described in the following, and features of the various claim categories can be combined in any appropriate manner.

According to the invention, the amount of binding agent amount is maximally 30 % by weight, more preferably maximally 15 % by weight, and most preferably maximally 10 % by weight related to the mass of the growth medium. Through this approach a self-supporting structure can be produced without using excessive binding agent.

According to the invention, the binding agent consists of at least 50 % poly lactic acid or modified poly lactic acid, more preferably at least 70 %, most preferably at least 80 % by weight related to the weight of the binding agent as poly lactic acid and modified poly lactic acid have been found to be efficient in biding the constituents of the growth medium together.

In a preferred embodiment of the invention, the binding agent consists of fibres with a denier value below 40, more preferably below 25 as this reduces the amount of fibrous material required to obtain a self-supporting structure.

For various embodiments of the invention, dyed fibres or mixtures of dyed and non-dyed fibres are used as binding agent.

A preferred dying of the fibres is to mimic the colour of the growth medium. Preferably the dye used for dying the fibres of the binding agent is biodegradable.

For alternative embodiments, the binding agent is comprised by more than 50 % by weight of a fibrous material and by less than 50 % of another binding agent that can be a liquid, slurry or solid at ambient temperature. The addition of a non-fibrous binding agent can aid the formation of the cohesive structure. The non-fibrous binding agent can consist of the same chemical components as the fibrous part of the binding agent as well as other components that chemically differ from that or those of the fibrous part of the binding agent with examples being polyurethane, poly vinyl ethylene and poly vinyl alcohol.

A self-supporting structure is obtained by mixing the growth medium with the fibrous material. After mixing the fibres and the growth medium the substance is formed into the desired shape. The shape can be a solid structure such as a plug, block or mat and structure with one or more open sides such as a pot.

In preferred embodiments of the invention, the self-supporting structure is manufactured by using growth medium and fibres present at ambient temperatures and mix the two components constituting the said structure at ambient temperature. After mixing, the mixture consisting of the growth medium and the fibrous material is shaped into the desired dimension.

In a further aspect of the invention, the growth medium and the fibrous material are mixed and shaped into the dimension of interest. This structure is then sterilised at ambient temperature by using for instance gamma radiation. Sterilisation through radiation can be economically better than heat treatment, especially if the growth medium or the biding agent contain water or have a high heat capacity.

According to one embodiment of the invention, the self-supporting material is manufactured by adding the growth medium and the binding agent to a container with at least one open side. The growth medium and the binding agent are mixed by hand in a kneading process followed by shaping into the desired dimension to yield a self-supporting plug.

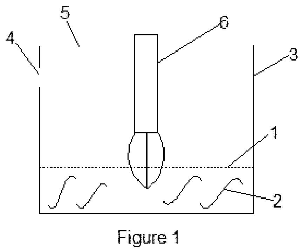

In another embodiment of the invention as shown in Figure 1, the self-supporting plug is produced by having the growth medium 1 and the binding agent 2 in a container 3 that can be completely closed or have one or more openings 4 or one or more open sides 5 or alternatively combinations hereof. In the container one or more stirring devices 6 are positioned. The stirring device can attain various geometries and is preferably made from or coated with a material with a low surface tension such as poly tetrafluoro ethylene or silicone. The surface tension of the material used to produce the stirrer or the coating on the stirrer is preferably below 40 dyn/cm, more preferably below 35 dyn/cm to prevent adherence between the stirrer and the growth medium and binding agent. The growth medium and the binding agent are mixed by rotating the stirrer inside the container until a cohesive structure between the growth medium and the binding agent is created. Afterwards the structure obtained after mixing the growth medium and the binding agent is shaped into the desired dimension to form a self-supporting structure.

In an alternative embodiment, the growth medium and the binding agent are present in a container. Water is preferably added to the container to wet the growth medium and the binding agent and the growth medium and binding agent are mixed through jet streams or other means of introducing movement within the container as known to those skilled in the art. When the growth medium and binding agent have been adequately mixed, said mixed material is dried and formed into the desired dimension. In another embodiment, the said mixed material is formed into the desired shape followed by a drying procedure. The drying is by applying heat, pressure reduction, centrifugation or combinations hereof. The drying step is preferably preformed by means of centrifugation.

In a further embodiment of the invention, the growth medium and the binding agent are present in dry or neural humidity state in a container as the growth medium and binding might be in such states as-received. By applying pressurised air into the container through nozzles or other arrangements as known to those skilled in the art, the growth medium and the binding agent inside the container are brought into movement. Through the movement, the growth medium and the binding agent are mixed. Following the mixing, the mixed material is shaped in to the desired dimension.

## Claims

1. A self-supporting structure used for germinating seeds and plant growth and which comprises a growth medium constituted of a plurality of singular constituents, where each of the singular constituents are bonded to one or other constituents by a binding agent, where the binding agent is a fibrous material, where the fibrous binding agent and the growth medium are mixed followed by shaping into a shape of the structure being either a plug, mat, block or pot, and where mixing and shaping of the growth medium and the fibrous binding agent has been carried out at a temperature between 0-50 °C, preferably 10-30 °C, and where said fibrous binding agent consists of at least 50 % poly lactic acid or modified poly lactic acid, more preferably at least 70 %, most preferably at least 80 % by weight related to the weight of the binding agent and where the amount of fibrous binding agent is maximally 30 % by weight related to the weight of the growth medium.

2. The structure according to claim 1, where the amount of binding agent is maximally 15 % by weight and preferably maximally 10 % by weight related to the weight of the growth medium.

3. The structure of claim 1 wherein the binding agent is biodegradable or partly biodegradable such as, but not restricted to, poly ethylene glycol, poly-ε-caprolactone, poly lactic acid, modified poly lactic acid, poly hydroxyalkanoate, hemp, flax, coconut fibres, naturally occurring fibres with examples being cotton and silk, naturally occurring fibres coated with one or more types of polymer, starch and starch based fibres, cellulose, cellulose based fibres such as lyocell and viscose, fibres consisting of carbohydrate monomers, dimers or oligomers such as sucrose and co-polymer fibres of mixtures of non-biodegradable and biodegradable components or fully biodegradable components.

4. The structure of claim 1 wherein the binding agent is dyed fibres.

5. The structure of claim 1 wherein the binding agent is a mixture of more types of fibres selected from fibres such as poly ethylene glycol, poly-ε-caprolactone, poly hydroxyalkanoate, hemp, flax, coconut fibres, naturally occurring fibres with examples being cotton and silk, naturally occurring fibres coated with one or more types of polymer, starch and starch based fibres, cellulose, cellulose based fibres such as lyocell and viscose, fibres consisting of carbohydrate monomers, dimers or oligomers such as sucrose, co-polymer fibres of mixtures of non-biodegradable and biodegradable components or fully biodegradable components, polyamides, polyurethanes, some types of polyester such as poly ethylene terephthalate and co-polymers of non-biodegradable components.

6. The structure according to claim 1 and 5 wherein the binding agent completely or partly is comprised by a fibrous material fully or partly comprised by or coated with one or more components requiring the addition of a curable to obtain the desired properties as a binding agent where the curable can bind to either the fibrous material or to the fibrous material and the growth medium and the curable can contain one or more of the following reactive chemical groups: amines, imines, carboxylic acids, thiols, and oxiranes.

7. The structure according to claim 1 where the binding agent consists of fibres with a denier value below 40, more preferably below 25 as this reduces the amount of fibrous material required to obtain a self-supporting structure.

8. The structure according to claim 1 wherein the binding agent is comprised by more than 50 % by weight of a fibrous material and by less than 50 % of another binding agent that can be a liquid, slurry or solid at ambient temperature which can consist of the same chemical components as the fibrous part of the binding agent as well as other components that chemically differ from that or those of the fibrous part of the binding agent with examples being polyurethane, poly vinyl ethylene and poly vinyl alcohol.

9. A method of preparing a self-supporting structure according to claim 1 where the fibrous binding agent and the growth medium are mixed by hand followed by shaping into the shape of a structure being either a plug, mat, block, pot or similar.

10. A method of preparing a self-supporting structure according to claim 1 wherein the growth medium and the binding agent are added to a container and mixed through stirring with one or more stirrers that are made from or coated with a material with surface tension preferably below 40 dyn/cm, more preferably below 35 dyn/cm.

11. A method of preparing a self-supporting structure according to claim 1 where the growth medium and the binding agent are mixed in a wet state by applying jet streams followed by drying and shaping of the mixed growth medium and binding agent or alternatively followed by shaping and drying.

12. A method of preparing a self-supporting structure according to claim 1 where the growth medium and binding agent are provided in dry or neutral humidity state and are mixed in a chamber by applying air convection through the chamber.

## Patentansprüche

1. Selbsttragende Struktur, die zum Keimen von Samen und Pflanzenwachstum verwendet wird und ein Wachstumsmedium umfasst, das aus einer Vielzahl von singulären Bestandteilen besteht, wobei jeder der singulären Bestandteile durch ein Bindemittel an einen oder anderen Bestandteil gebunden ist, wobei das Bindemittel ein faseriges Material ist, wobei das faserige Bindemittel und das Wachstumsmedium gemischt werden, gefolgt von einer Formgebung in eine Form, bei der die Struktur entweder ein Stopfen ist, Matte, Block oder Topf, und wo das Mischen und Formen des Nährmediums und des faserigen Bindemittels bei einer Temperatur zwischen 0 und 50 °C, vorzugsweise 10 bis 30 °C erfolgt ist, und wo das faserige Bindemittel zu mindestens 50 % aus Polymilchsäure oder modifizierter Polymilchsäure besteht, besonders bevorzugt zu mindestens 70 %, am meisten bevorzugt zu mindestens 80 Gew.-% bezogen auf das Gewicht des Bindemittels und wo die Menge an der faserige Bindemittelanteil beträgt maximal 30 % bezogen auf das Gewicht des Wachstumsmediums.

2. Struktur nach Anspruch 1, wobei die Bindemittelmenge maximal 15 Gew.-% und vorzugsweise maximal 10 Gew.-% bezogen auf das Gewicht des Wachstumsmediums beträgt.

3. Struktur nach Anspruch 1, wobei das Bindemittel biologisch oder teilweise biologisch abbaubar ist, wie z. B. Polyethylenglykol, Poly-ε-Caprolacton, Polymilchsäure, modifizierte Polymilchsäure, Polyhydroxyalkanoat, Hanf, Flachs, Kokosfasern, natürlich vorkommende Fasern, z. B. Baumwolle und Seide, natürlich vorkommende Fasern, die mit einer oder mehreren Polymerarten beschichtet sind, Stärke und Fasern auf Stärkebasis, Cellulose, Fasern auf Cellulosebasis wie Lyocell und Viskose, Fasern, die aus Kohlenhydratmonomeren, Dimeren oder Oligomeren wie Saccharose bestehen, und Copolymerfasern aus Mischungen aus nicht biologisch abbaubaren und biologisch abbaubaren Bestandteilen oder vollständig biologisch abbaubaren Bestandteilen.

4. Struktur nach Anspruch 1, wobei das Bindemittel gefärbte Fasern sind.

5. Struktur nach Anspruch 1, wobei das Bindemittel eine Mischung aus mehreren Arten von Fasern ist, ausgewählt aus Fasern wie Polyethylenglykol, Poly-ε-Caprolacton, Polyhydroxyalkanoat, Hanf, Flachs, Kokosfasern, natürlich vorkommenden Fasern, z. B. Baumwolle und Seide, natürlich vorkommenden Fasern, die mit einer oder mehreren Arten von Polymeren beschichtet sind, Stärke und Fasern auf Stärkebasis, Zellulose, Fasern auf Zellulosebasis wie Lyocell und Viskose, Fasern, die aus Kohlenhydratmonomeren, Dimeren oder Oligomeren wie Saccharose bestehen, Copolymerfasern aus Mischungen aus nicht biologisch abbaubaren und biologisch abbaubaren Bestandteilen oder vollständig biologisch abbaubaren Bestandteilen, Polyamide, Polyurethane, einige Arten von Polyestern wie Polyethylenterephthalat und Copolymere aus nicht biologisch abbaubaren Bestandteilen.

6. Struktur nach Anspruch 1 und 5, wobei das Bindemittel ganz oder teilweise aus einem faserigen Material besteht, das ganz oder teilweise aus einer oder mehreren Komponenten besteht oder mit einer oder mehreren Komponenten beschichtet ist, die die Zugabe eines Härtungsmittels erfordern, um die gewünschten Eigenschaften als Bindemittel zu erhalten, wobei das Härtungsmittel entweder an das faserige Material oder an das faserige Material binden kann und das Wachstumsmedium und das Härtungsmittel ein oder mehrere enthalten kann der folgenden reaktiven chemischen Gruppen: Amine, Imine, Carbonsäuren, Thiole und Oxirane.

7. Struktur nach Anspruch 1, wobei das Bindemittel aus Fasern mit einem Denierwert kleiner als 40, besonders bevorzugt unter 25 besteht, da dies die Menge an Fasermaterial verringert, die zur Erzielung einer selbsttragenden Struktur erforderlich ist.

8. Struktur nach Anspruch 1, wobei das Bindemittel zu mehr als 50 Gew.-% aus einem faserigen Material und zu weniger als 50 % aus einem anderen Bindemittel besteht, das bei Umgebungstemperatur eine Flüssigkeit, eine Aufschlämmung oder ein Feststoff sein kann und aus denselben chemischen Bestandteilen bestehen kann wie der faserige Teil des Bindemittels sowie aus anderen Bestandteilen, die sich chemisch von dem oder denen des faserigen Teils des Bindemittels unterscheiden. Das Bindemittel mit Beispielen sind Polyurethan, Polyvinylethylen und Polyvinylalkohol.

9. Verfahren zur Herstellung einer selbsttragenden Struktur nach Anspruch 1, bei dem das faserige Bindemittel und das Wachstumsmedium von Hand gemischt und anschließend in die Form einer Struktur gebracht werden, die entweder ein Pfropfen, eine Matte, ein Block, ein Topf oder ähnliches ist.

10. Verfahren zur Herstellung einer selbsttragenden Struktur nach Anspruch 1, wobei das Wachstumsmedium und das Bindemittel in ein Gefäß gegeben und durch Rühren mit einem oder mehreren Rührern gemischt werden, die aus einem Material mit einer Oberflächenspannung vorzugsweise unter 40 dyn/cm, besonders bevorzugt unter 35 dyn/cm hergestellt oder damit beschichtet sind.

11. Verfahren zur Herstellung einer selbsttragenden Struktur nach Anspruch 1, wobei das Wachstumsmedium und das Bindemittel in nassem Zustand durch Auftragen von Jetstreams gemischt werden, gefolgt von Trocknen und Formen des gemischten Wachstumsmediums und des Bindemittels oder alternativ gefolgt von Formen und Trocknen.

12. Verfahren zur Herstellung einer selbsttragenden Struktur nach Anspruch 1, wobei das Wachstumsmedium und das Bindemittel in trockenem oder neutralem Feuchtigkeitszustand bereitgestellt und in einer Kammer durch Anwenden von Luftkonvektion durch die Kammer gemischt werden.

## Revendications

1. Structure autoportante utilisée pour la germination des graines et la croissance des plantes et qui comprend un milieu de croissance constitué d'une pluralité de constituants singuliers, où chacun des constituants singuliers est lié à l'un ou l'autre constituant par un agent liant, lorsque l'agent liant est un matériau fibreux, où l'agent liant fibreux et le milieu de croissance sont mélangés suivis d'une mise en forme de la structure étant soit un bouchon, tapis, bloc ou pot, et où le mélange et la mise en forme du milieu de croissance et du liant fibreux ont été effectués à une température comprise entre 0 et 50 °C, de préférence 10 à 30 °C, et où ledit liant fibreux est constitué d'au moins 50 % d'acide polylactique ou d'acide polylactique modifié, de préférence d'au moins 70 %, de préférence d'au moins 80 % en poids par rapport au poids de l'agent liant et où la quantité de Le liant fibreux est au maximum de 30 % en poids par rapport au poids du milieu de croissance.

2. Structure selon la revendication 1, où la quantité de liant est au maximum de 15 % en poids et de préférence au maximum de 10 % en poids par rapport au poids du milieu de croissance.

3. Structure selon la revendication 1, dans laquelle l'agent liant est biodégradable ou partiellement biodégradable, tel que, mais sans s'y limiter, le polyéthylène glycol, le poly-ε-caprolactone, l'acide polylactique, l'acide polylactique modifié, le polyhydroxyalcanoate, le chanvre, le lin, les fibres de noix de coco, les fibres naturelles, par exemple le coton et la soie, les fibres naturelles enrobées d'un ou plusieurs types de polymères, amidon et fibres à base d'amidon, cellulose, fibres à base de cellulose telles que le lyocell et la viscose, fibres constituées de monomères de glucides, dimères ou oligomères tels que le saccharose et fibres copolymères de mélanges de composants non biodégradables et biodégradables ou de composants entièrement biodégradables.

4. Structure selon la revendication 1, dans laquelle l'agent liant est constitué de fibres teintées.

5. Structure selon la revendication 1, dans laquelle l'agent liant est un mélange de plusieurs types de fibres choisies parmi des fibres telles que le polyéthylène glycol, le poly-ε-caprolactone, le poly-hydroxyalcanoate, le chanvre, le lin, les fibres de noix de coco, les fibres naturelles, par exemple le coton et la soie, les fibres naturelles enrobées d'un ou plusieurs types de polymères, l'amidon et les fibres à base d'amidon, cellulose, fibres à base de cellulose telles que le lyocell et la viscose, fibres constituées de monomères de glucides, de dimères ou d'oligomères tels que le saccharose, fibres copolymères de mélanges de composants non biodégradables et biodégradables ou de composants entièrement biodégradables, polyamides, polyuréthanes, certains types de polyester tels que le polyéthylène téréphtalate et copolymères de composants non biodégradables.

6. Structure selon les revendications 1 et 5, dans laquelle l'agent liant est entièrement ou partiellement constitué d'un matériau fibreux, entièrement ou partiellement compris ou enrobé d'un ou de plusieurs composants, nécessitant l'addition d'un durcissable pour obtenir les propriétés souhaitées en tant qu'agent liant, où le durcissable peut se lier soit au matériau fibreux, soit au matériau fibreux et le milieu de croissance et le durcissable peuvent contenir un ou plusieurs des groupes chimiques réactifs suivants : amines, imines, acides carboxyliques, thiols et oxyranes.

7. Structure selon la revendication 1, dans laquelle le liant est constitué de fibres dont la valeur du denier est inférieure à 40, de préférence inférieure à 25, car cela réduit la quantité de matériau fibreux nécessaire pour obtenir une structure autoportante.

8. Structure selon la revendication 1, dans laquelle l'agent liant est composé de plus de 50 % en poids d'un matériau fibreux et de moins de 50 % d'un autre agent liant qui peut être un liquide, une boue ou un solide à température ambiante qui peut être constitué des mêmes composants chimiques que la partie fibreuse de l'agent liant ainsi que d'autres composants qui diffèrent chimiquement de celui ou ceux de la partie fibreuse de le liant, par exemple le polyuréthane, le polyvinyléthylène et l'alcool polyvinylique.

9. Procédé de préparation d'une structure autoportante selon la revendication 1, dans lequel l'agent liant fibreux et le milieu de croissance sont mélangés à la main, suivis d'une mise en forme d'une structure étant soit un bouchon, un tapis, un bloc, un pot ou similaire.

10. Procédé de préparation d'une structure autoportante selon la revendication 1, dans lequel le milieu de croissance et l'agent liant sont ajoutés à un récipient et mélangés par agitation avec un ou plusieurs agitateurs fabriqués à partir d'un matériau ou recouverts d'un matériau ayant une tension superficielle de préférence inférieure à 40 dyn/cm, plus préférence inférieure à 35 dyn/cm.

11. Procédé de préparation d'une structure autoportante selon la revendication 1, dans lequel le milieu de croissance et l'agent liant sont mélangés à l'état humide par l'application de jets, suivis d'un séchage et d'une mise en forme du milieu de croissance mixte et de l'agent liant, ou alternativement suivis d'une mise en forme et d'un séchage.

12. Procédé de préparation d'une structure autoportante selon la revendication 1, dans lequel le milieu de croissance et l'agent liant sont fournis à l'état sec ou à l'humidité neutre et sont mélangés dans une chambre par application d'une convection d'air à travers la chambre.
